Europäisches Patentamt

European Patent Office

Office européen des brevets

(19)

(11)     EP 0 727 390 A2

(12)     EUROPÄISCHE PATENTANMELDUNG

(43) Veröffentlichungstag:
      21.08.1996  Patentblatt 1996/34

(51) Int. Cl.⁶: C01C 1/20, C25B 1/00

(21) Anmeldenummer: 96101972.6

(22) Anmeldetag: 12.02.1996

(84) Benannte Vertragsstaaten:
     DE FR NL

(30) Priorität: 15.02.1995 DE 19504920

(71) Anmelder: METALLGESELLSCHAFT
     AKTIENGESELLSCHAFT
     D-60323 Frankfurt am Main (DE)

(72) Erfinder:
     • Anastastjevic, Nikola, Dr.
       D-61137 Schöneck (DE)
     • Hillrichs, Eilhard, Dr.
       D-63654 Büdingen (DE)
     • Lohrberg, Karl
       D-63150 Heusenstamm (DE)
     • Ungar, Gert
       D-60598 Frankfurt am Main (DE)

(54)     Verfahren zum elektrochemischen Erzeugen von Ammoniumpolysulfid

(57)     Das Ammoniumpolysulfid wird in mindestens einer elektrochemischen Zelle erzeugt, welcher man als Elektrolyt eine wäßrige Ammoniumsulfid-Lösung zuführt. Die Zelle weist eine Anode, eine Gasdiffusionskathode und zwischen der Anode und der Kathode eine Elektrolytkammer auf, wobei die Zellenspannung 0,01 bis 5 Volt beträgt. Die Kathode weist eine elektrisch leitende, gasdurchlässige Kohlenstoffschicht auf, die mit freiem Sauerstoff enthaltendem Gas angeströmt wird und mit dem Elektrolyten in Kontakt steht. Man leitet O₂-haltiges Gas in die Elektrolytkammer und bildet dabei in der Elektrolytkammer Hydroperoxid-Anionen (OOH⁻). Aus der Elektrolytkammer wird eine Ammoniumpolysulfid enthaltende Lösung und ein Restgas abgezogen.

Fig. 1

EP 0 727 390 A2

**Beschreibung**

Die Erfindung betrifft ein Verfahren zum Erzeugen von Ammoniumpolysulfid (APS) in mindestens einer elektrochemischen Zelle, welcher man als Elektrolyt eine wäßrige Ammoniumsulfid-Lösung zuführt und aus welcher man eine APS enthaltende Lösung abzieht.

Ein solches Verfahren ist aus EP-A-0 226 415 und aus DE-C-43 06 445 bekannt. Der Erfindung liegt die Aufgabe zugrunde, ein kostengünstiges und gleichzeitig leistungsfähiges Verfahren zu schaffen, welches eine gesteigerte Produktion an APS ermöglicht. Erfindungsgemäß gelingt dies beim eingangs genannten Verfahren dadurch, daß die Zelle eine Anode, eine Gasdiffusionskathode und zwischen der Anode und der Kathode eine Elektrolytkammer aufweist, wobei die Zellenspannung 0,01 bis 5 Volt beträgt, daß die Kathode eine elektrisch leitende, gasdurchlässige Kohlenstoffschicht aufweist, die mit freien Sauerstoff enthaltendem Gas angeströmt wird und mit dem Elektrolyten in Kontakt steht, daß man freien Sauerstoff enthaltendes Gas in die Elektrolytkammer leitet, wobei in der Elektrolytkammer Hydroperoxid-Anionen (OOH⁻) gebildet werden, und daß man aus der Elektrolytkammer eine APS enthaltende Lösung und ein Restgas abzieht. Das Ammoniumpolysulfid hat die chemische Formel $(NH_4)_2S_x$, wobei x im Bereich von 2 bis 6 liegt. Der Druck in der Zelle kann im Bereich von 0,1 bis 20 bar und bei spezieller Ausgestaltung bis 60 bar liegen.

Beim erfindungsgemäßen Verfahren wird das APS in der elektrochemischen Zelle gleichzeitig auf drei verschiedenen Wegen A, B, und C in folgender Weise erzeugt:

Weg A:  An der Anode werden Sulfid-Ionen durch Entzug von negativer Ladung zu Elementarschwefel oxidiert, der sich mit Ammoniumsulfid zu APS verbindet:

$$(NH_4)_2S + (x-1) \cdot S^{2-} = (NH_4)_2S_x + 2(x-1) \cdot e^-$$

Weg B:  An der Gasdiffusionskathode und insbesondere an deren Kohlenstoffschicht laufen vor allem die folgenden beiden Reaktionen mit Ladungsaustausch ab:

$$\text{Hauptreaktion: } O_2 + H_2O + 2e \longrightarrow OOH^- + OH^-$$

$$\text{Nebenreaktion: } O_2 + 2 H_2O + 4e \longrightarrow 4OH^-$$

Die Hauptreaktion ist dadurch vorteilhaft, daß das Hydroperoxid-Anion (OOH⁻) gebildet wird. Die Nebenreaktion mit ihrer reinen Hydroxidbildung ist ungünstig. Die Polysulfidbildung, d.h. die dazu nötige Bildung von Elementarschwefel geschieht auf folgende Weise:

$$S^{2-} + OOH^- + H_2O \longrightarrow S + 3 OH^-$$

Der Elementarschwefel bildet bekannterweise APS in einer Ammoniumsulfidlösung. Für diesen Weg der Polysulfidbildung sind Katalysatormetalle, z.B. Edelmetalle, auf der Kohlenstoffschicht der Gasdiffusionskathode ungünstig, da sie die zuvor genannte Nebenreaktion verstärken. Beim Verfahren der Erfindung werden mindestens 10 Gew.-% und vorzugsweise mindestens 20 Gew.-% des gebildeten APS durch die Bildung von Hydroperoxid-Anionen und deren Umsetzung mit Sulfidionen erzeugt.

Weg C:  Hierbei erfolgt eine chemische Oxidation durch die Bildung von aktiviertem Sauerstoff, der in der Elektrolysezelle im elektrischen Feld entsteht. Dabei läuft folgende Reaktion ab:

$$O_2 \text{ (aktiviert)} + 2 S^{2-} + 2 H_2O \longrightarrow 2 S + 4 OH^-$$

Die Aktivierung des Sauerstoffs erfolgt in der Elektrolytkammer bevorzugt jeweils an den Oberflächen der Kathode und der Anode, doch findet hierbei kein Austausch von elektrischer Ladung statt. Es ist deshalb wichtig, daß gasförmiger Sauerstoff in die Elektrolytkammer geleitet wird. Die wissenschaftliche Erklärung für diese Sauerstoff-Aktivierung kann hier nicht gegeben werden, es steht aber fest, daß der Sauerstoff ohne das elektrische Feld nicht aktiviert wird. Um den Beitrag der APS-Bildung durch den aktivierten Sauerstoff zu vergrößern, kann sich in der Zelle ein höherer Druck als 1 bar empfehlen. Höchst vorteilhaft ist, daß auf dem Weg C kein Strom verbraucht wird. Beim Verfahren der Erfindung werden mindestens 10 Gew.-% und vorzugsweise mindestens 20 Gew.-% des gebildeten APS durch den gasförmigen Sauerstoff erzeugt, der in die Elektrolytkammer oder -kammern geleitet wird.

Das erfindungsgemäße Verfahren schafft es, das APS gleichzeitig sowohl auf elektrochemischem als auch chemischem Weg zu erzeugen. Formal gesehen wird auf diese Weise eine Stromausbeute größer 100 % und zumeist von mindestens 150 % erreicht. Die Stromausbeute errechnet sich aus der Gesamtladung des gebildeten Elementarschwefels, bezogen auf den tatsächlichen Stromaufwand. Bei rein elektrochemischer APS-Erzeugung an einer Elektrode, z.B. der Anode, kann die Stromausbeute 100 % nicht überschreiten.

Die Kohlenstoffschicht der Gasdiffusionskathode kann auf verschiedene Weise ausgebildet werden. Eine Möglichkeit besteht darin, daß eine Schicht von Kohlenstoffasern, z.B. ein Tuch aus Kohlenstoffasern, die Kohlenstoffschicht bildet. Ein solches Tuch aus Kohlenstoffasern ist z.B. im US-Patent 4 293 396 beschrieben, wobei die Fasern zusätzlich mit einem Gemisch aus Partikeln von Kohlenstoff und Polytetrafluorethylen (PTFE) beschichtet sind, um sie hydrophob zu machen. Die Beschichtung kann auch durch ein Pulvergemisch aus Graphit und PTFE gebildet sein. Die Kohlenstoffschicht kann ferner durch eine Schicht aus Kohlenstoff-Formkörpern oder Kohlenstoff-Granulat gebildet werden, z.B. in Form einer Schüttung von Kohlenstoffkörnern, die zwischen gasdurchlässigen Wänden angeordnet ist. Auch hierbei ist die erwähnte Hydrophobierung der Oberflächen der Körner durch PTFE-Partikel zu empfehlen. Es wurde gefunden, daß die Beschichtung der Kohlenstoffschicht mit einem Graphit-PTFE-Partikelgemisch die Aktivierung des Sauerstoffs und die so auf dem Weg C erreichte APS-Produktion sehr begünstigt. Dadurch werden Stromausbeuten von über 150 % erreichbar. Dabei wird es möglich, daß die Menge an chemisch erzeugtem APS zu elektrochemisch erzeugtem APS mindestens 1:1 beträgt.

Zur Gasdiffusionskathode gehört eine elektrisch leitende Metallstruktur, wobei man diese Metallstruktur bevorzugt aus Nickel oder nickelreichen Legierungen bildet. Diese Struktur dient dazu, um eine homogene Stromverteilung über die Elektrodenfläche zu bekommen. Die Metallstruktur wird im allgemeinen gasdurchlässig sein, es kann sich also z.B. um ein perforiertes Blech, um Streckmetall oder ein Metallgitter handeln. Mit dieser Metallstruktur ist die Kohlenstoffschicht leitend verbunden. Die Anode besteht im allgemeinen aus einem Metallblech, doch ist auch hier eine Gitterstruktur möglich. Für die Anode eignen sich als Materialien neben Graphit insbesondere korrosionsstabile Nickellegierungen (z.B. Hastelloy).

Der Elektrolytkammer wird eine wäßrige Ammoniumsulfid-Lösung zugeführt, wobei der Gehalt an $(NH_4)_2S$ im Bereich von 0,1 bis 200 g/l liegt und vorzugsweise mindestens 10 g/l beträgt. Der pH-Wert des Elektrolyten liegt üblicherweise im Bereich von 7 bis 12 und man arbeitet zumeist mit Elektrolyt-Temperaturen von 20 bis 50°C. Der Elektrolyt kann zusätzlich $NH_3$, Cyanide und organische Verunreinigungen enthalten, ohne daß das Verfahren gestört wird.

Ausgestaltungsmöglichkeiten des Verfahrens werden mit Hilfe der Zeichnung erläutert. Es zeigt:

Fig. 1       eine einzelne Zelle in schematischer Darstellung,

Fig. 2       mehrere Zellen mit elektrisch in Serie geschalteten Elektroden,

Fig. 3       mehrere, elektrisch parallel geschaltete Zellen,

Fig. 4       einen Querschnitt durch eine Zelle mit zylindrischen Elektroden,

Fig. 5       mehrere, übereinander angeordnete Zellen mit elektrisch in Serie geschalteten Elektroden und

Fig. 6       eine bipolare elektrische Anordnung in einer Kolonne.

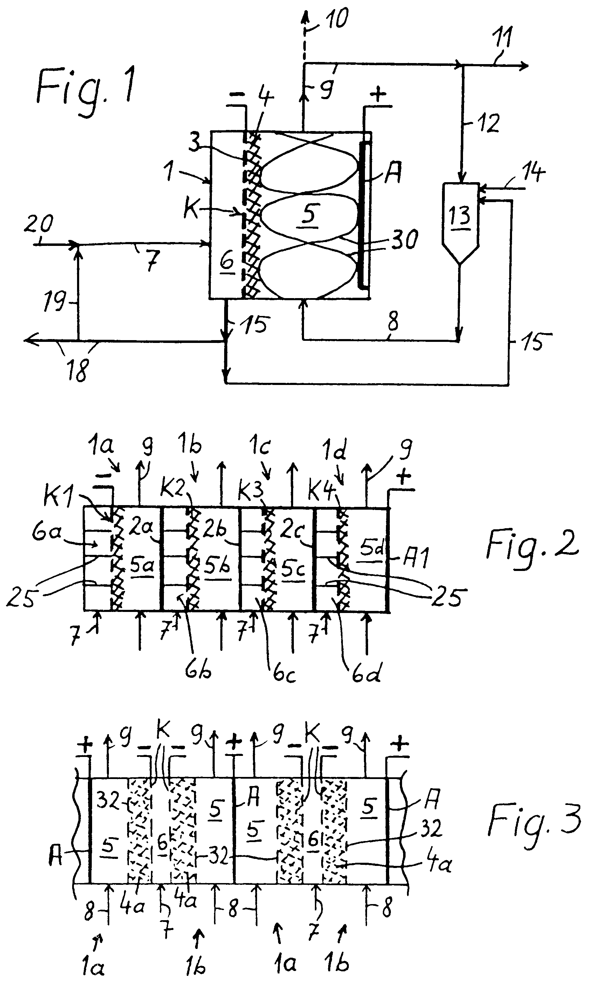

Die elektrochemische Zelle der Fig. 1 weist einen Behälter (1) aus elektrisch nicht leitendem Material auf, in welchem die Anode A und die Kathode K angeordnet sind.

Zur Kathode gehört ein flächiges, gasdurchlässiges Metallelement (3), z.B. ein Metallnetz oder Streckmetall, mit welchem eine Kohlenstoffschicht (4) verbunden ist. In Fig. 1 wird davon ausgegangen, daß es sich bei der Kohlenstoffschicht (4) um ein Kohlenstofftuch handelt, das mit einem Gemisch aus Graphit- und PTFE-Partikeln beschichtet ist. Zwischen der Kathode K und der Anode A befindet sich eine Elektrolytkammer (5) und ferner weist der Behälter (1) einen Gasverteilerraum (6) auf. Sauerstoffhaltiges Gas, z.B. Luft, mit Sauerstoff angereicherte Luft oder technisch reiner Sauerstoff, wird durch die Leitung (7) dem Gasverteilerraum (6) zugeführt.

Um den Abstand zwischen der Kathode K und der Anode A zu fixieren, kann es zweckmäßig sein, ein Stützgerüst (30) aus elektrisch nicht leitendem Material, z.B. Polypropylen, in der Elektrolytkammer (5) anzuordnen. Das Stützgerüst läßt Flüssigkeit und Gas weitgehend ungehindert in der Kammer (5) zirkulieren.

Der Elektrolyt, eine wäßrige Ammoniumsulfid-Lösung, wird der Elektrolytkammer (5) durch die Leitung (8) zugeführt und APS-haltige Lösung wird in der Leitung (9) abgezogen. Im Gasverteilerraum (6) sorgt man für einen geringen Überdruck, so daß das Gas durch die Kathode K hindurchtreten kann und in die Elektrolytkammer eintritt. In der Kammer (5) perlt das Gas, das stets noch molekularen Sauerstoff enthält, aufwärts und wird zusammen mit der Flüssigkeit durch die Leitung (9) abgezogen. In der Leitung (9) trennt sich das Gas von der Flüssigkeit und wird durch die gestrichelte Leitung (10) abgeführt. Dieses Gas, das hier auch als Restgas bezeichnet wird, enthält neben restlichem Sauerstoff üblicherweise $NH_3$ und $H_2S$.

Die Flüssigkeit der Leitung (9) ist mit Ammoniumpolysulfid angereichert und man zieht einen Teilstrom davon in der Leitung (11) als Produkt ab. Die restliche Lösung wird durch die Leitung (12) in einen Sammelbehälter (13) geführt, dem man auch frische Ammoniumsulfid-Lösung durch die Leitung (14) aufgibt. Aus dem Behälter (13) wird ammoniumsulfidreiche Lösung in der Leitung (8) zurück in die Elektrolytkammer (5) geführt.

Da die Kathode K gasdurchlässig ist, muß damit gerechnet werden, daß Elektrolyt aus der Kammer (5) durch die Kathode K in die Gasverteilerkammer (6) sickert. Um den Flüssigkeitsstand in der Kammer (6) niedrig zu halten, ist eine Drainageleitung (15) vorgesehen, die ihre Flüssigkeit zurück in den Sammelbehälter (13) führt. Durch die Drainageleitung (15) wird zwangsläufig auch ein gewisser Teil des sauerstoffhaltigen Gases der Kammer (6) abgezogen, wobei man dieses Gas in der Leitung (18) abtrennt und einen Teil davon über die Leitung (19) zurück zur Leitung (7) führt. Frisches, sauerstoffhaltiges Gas kommt aus der Leitung (20).

Bei der einzelnen in Fig. 1 dargestellten Zelle sorgt man für eine Zellenspannung zwischen der Kathode K und der Anode A von 0,1 bis 5 Volt. Die Stromdichte in der Elektrolytkammer (5) liegt üblicherweise im Bereich von 10 bis 1000 $A/m^2$ und der Abstand zwischen der Kohlenstoffschicht (4) und der Anode A liegt in der Praxis zumeist im Bereich von 3 bis 20 mm. Die Kohlenstoffschicht (4) kann eine Dicke im Bereich von 0,4 bis 20 mm aufweisen.

Fig. 2 zeigt vier elektrisch in Serie geschaltete Zellen (1a), (1b), (1c) und (1d) mit einer Endkathode K1 und einer Endanode A1. Die Gasverteilerkammern (6a), (6b), (6c) und (6d) erhalten jeweils freien Sauerstoff enthaltendes Gas durch die Leitungen (7).

Zwischen benachbarten Zellen sind jeweils flüssigkeitsdichte Metallplatten (2a), (2b) und (2c) angeordnet, welche einerseits eine Trennwand zwischen benachbarten Zellen bilden und andererseits als Anoden für die unmittelbar anschließende Elektrolytkammer (5a), (5b) oder (5c) wirken. Mit jeder Metallplatte elektrisch leitend verbunden ist eine Kathodenseite K2, K3 oder K4, wobei die elektrisch leitende Verbindung durch einzelne Metallstützen (25) gebildet wird. Diese Metallstützen durchziehen den jeweiligen Gasverteilerraum (6a), (6b), (6c) und (6d), der zur jeweiligen Zelle gehört. Jede Elektrolytkammer (5a), (5b), (5c) oder (5d) kann mit einem Stützgerüst (30) versehen sein, wie es in Fig. 1 dargestellt ist. Restgase und APS-haltige Flüssigkeit verlassen die jeweilige Elektrolytkammer durch die Leitung (9).

In den Zellen der Fig. 2 bilden jeweils eine Metallplatte (2a), (2b) oder (2c) zusammen mit der zugehörigen Kathodenseite K2, K3 oder K4 eine bipolare Elektrode, deren Potential zwischen den Potentialen der Endanode A1 und der Endkathode K1 liegt. Hierbei werden die Spannungsdifferenzen einerseits durch die zwischen der Endanode A1 und der Endkathode K1 liegenden Spannung und dem Ohmschen Widerstand des Elektrolyten in den Elektrolytkammern gebildet. Wie ersichtlich ist, braucht die Zellenanordnung der Fig. 2 nach außen nur zwei Anschlüsse zur Spannungsquelle und somit ergibt sich ein konstruktiv einfacher Aufbau.

Bei der Zellenanordnung der Fig. 3 sind jeweils zwei Zellen (1a) und (1b) spiegelbildlich zueinander angeordnet, so daß sie von einer gemeinsamen Gasverteilerkammer (6) aus mit $O_2$-haltigem Gas versorgt werden können. Die Anoden A liegen auf gleichem Potential und ebenso sind die Kathoden K elektrisch parallel geschaltet. Die Kohlenstoffschichten (4a) werden durch Kohlenstoffgranulat gebildet, dessen Oberfläche durch PTFE-Partikel hydrophob ausgerüstet ist. Das Granulat ist als Schüttung zwischen zwei gasdurchlässigen Wänden angeordnet. Eine dieser Wände wird durch die Kathode aus perforiertem Metallblech gebildet und die andere Wand (32) ist eine Siebplatte, die vorzugsweise aus elektrisch nicht leitendem Material besteht. Somit kann das sauerstoffhaltige Gas von der jeweiligen Verteilerkammer (6) ohne Schwierigkeiten durch die Kathode, die Granulatschüttung (4a) und die Siebplatte (32) in die nächstgelegene Elektrolytkammer (5) gelangen und dort im elektrischen Feld aufwärts strömen. Elektrolyt wird durch die Leitungen (8) zugeführt und APS-haltige Flüssigkeit und Restgas werden gemeinsam durch die Leitungen (9) abgezogen.

Ebenso wie in Fig. 2 wurde auch in Fig. 3 eine Drainageleitung (15), vgl. Fig. 1, der besseren Übersichtlichkeit wegen weggelassen. Falls erforderlich, können solche Drainageleitungen am Boden der Gasverteilerkammern auch in den Zellen gemäß Fig. 2 und Fig. 3 vorgesehen sein. Ebenso ist es möglich, bei den Zellen der Fig. 2 oder 3 in den Elektrolytkammern ein Stützgerüst (30) anzuordnen, wie das zusammen mit Fig. 1 erläutert wurde.

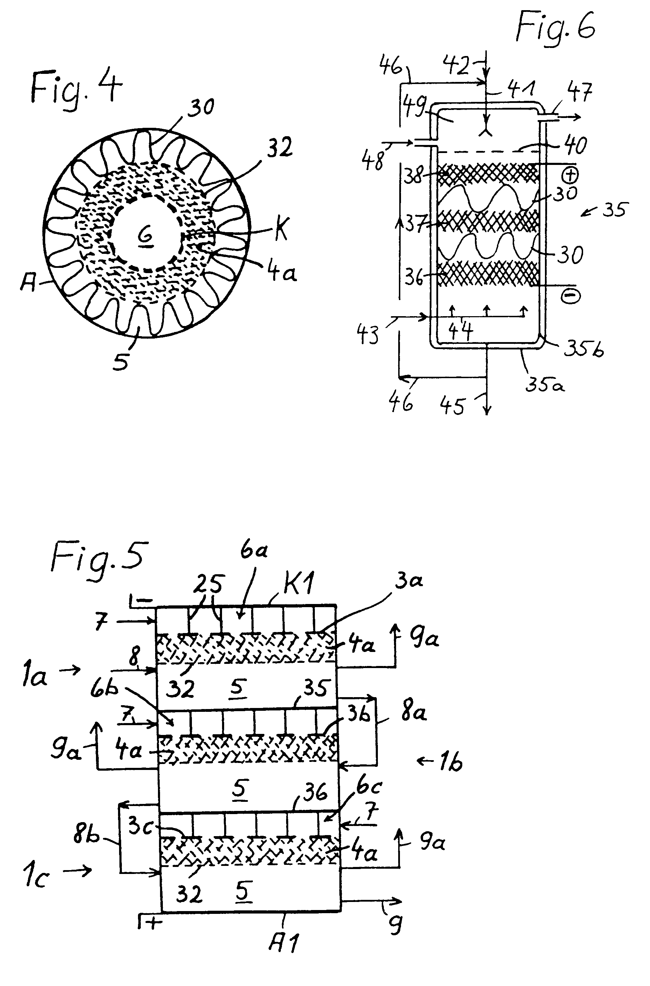

Eine zylinderförmige Zelle mit konzentrischen Elektroden ist im Querschnitt in Fig. 4 dargestellt. Der Gasverteilungsraum (6) befindet sich im Zentrum, umgeben von der Kathode K mit einer Kohlenstoffschicht in Form einer Granulatschüttung (4a) und einer perforierten, zylindrischen Stützwand (32). Die Elektrolytkammer (5) ist als Ringkammer ausgebildet, die von der zylindrischen Anode A umgeben ist. Die Elektrolytkammer (5) ist zur Verbesserung der Stabilität der Zelle mit einem Stützgerüst (30) versehen.

In der Ausgestaltung gemäß Fig. 5 sind drei Zellen (1a), (1b) und (1c) untereinander angeordnet, wobei man analog zu Fig. 2 mit bipolaren Elektroden arbeitet. Von einer nicht dargestellten, äußeren Spannungsquelle wird eine Gleichspannung an die Endanode A1 und die Endkathode K1 gelegt. Aufgrund der Ohmschen Widerstände des Elektrolyten liegen die flüssigkeitsdichten Trennplatten (35) und (36) auf Zwischenpotentialen. Die Trennplatten (35) und (36) aus Metall, z.B. einer korrosionsfesten Nickellegierung, stellen jeweils eine gas- und flüssigkeitsdichte Trennwand für die darunterliegende Zelle dar. Mit jeder Trennwand (35) und (36) sind Kathodenbleche (3a), (3b) oder (3c) durch elektrisch leitende Stege (25) verbunden. Unter den Kathodenblechen, die aus perforiertem Metall gebildet sind, befindet sich jeweils eine Schüttung (4a) aus Kohlenstoffgranulat, wobei die Unterseite der jeweiligen Schüttung durch einen perforierten Boden (32) gebildet wird. Zwischen dem Boden (32) und der darunterliegenden Wand A1, (35) oder (36) befindet sich die Elektrolytkammer (5), welche jeweils von der zugehörigen Gasverteilerkammer (6a), (6b) oder (6c) aus mit sauerstoffhaltigem Gas begast wird. Restgas wird jeweils durch die Leitung (9a) abgezogen.

In Fig. 5 sind die Zellen (1a), (1b) und (1c) in bezug auf den Elektrolytfluß in Serie geschaltet, wobei man den Elektrolyten durch die Leitung (8) der obersten Zelle und deren Elektrolytkammer (5) zuführt, den Elektrolyten durch die Leitung (8a) abzieht und in die darunterliegende Zelle (1b) einspeist und den Elektrolyten schließlich durch die Leitung (8b) in die unterste Zelle (1c) leitet. Die APS-haltige Lösung zieht man in der Leitung (9) ab.

Fig. 6 zeigt eine Kolonne (35) mit einem äußeren Metallmantel (35a) z.B. aus Stahl und einer Innenseite (35b) aus elektrisch nicht leitendem Material, z.B. Kunststoff. In der Kolonne sind übereinander mehrere Packungsschichten (36), (37) und (38) angeordnet, die jeweils aus Graphitkörpern gebildet und dadurch elektrisch leitfähig sind. Die Schichten sind gas- und flüssigkeitsdurchlässig, die Graphitkörper können in der bereits zuvor beschriebenen Weise durch Beschichtung mit PTFE-Partikeln hydrophobiert sein. An die Stelle der Packungsschichten können auch perforierte Graphitplatten oder graphithaltige Gitter treten.

Die oberste Packungsschicht (38) stellt die Endanode und die unterste Packungsschicht (36) die Endkathode einer elektrochemischen Anordnung mit elektrisch in Serie geschalteten Zellen dar. Die Zahl der dazwischen liegenden einzelnen Zellen, gegeben durch bipolare Elektroden, kann beliebig sein. In Fig. 6 stellt die Packungsschicht (37) eine bipolare Elektrode dar, in der Praxis werden mehrere solcher bipolarer Elektroden im Abstand übereinander angeordnet sein. Innerhalb jeder Einzelzelle kann ein elektrisch nicht leitendes Stützgerüst (30) angeordnet sein, was aber nicht unbedingt erforderlich ist. Die Kolonne (35) ist bis zum Flüssigkeitsspiegel (40) mit Elektrolyt gefüllt, der von oben durch die Leitung (41) zugeführt wird. Frische Ammoniumsulfid-Lösung kommt aus der Leitung (42). Der Elektrolyt bewegt sich in der Kolonne (35) nach unten durch die Packungsschichten und die Zellen hindurch, während $O_2$-haltiges Gas, in der Leitung (43) herangeführt und aus dem Verteiler (44) kommend, im Gegenstrom dazu aufwärts durch den Elektrolyten strömt. Dabei bildet sich APS, das als Lösung in der Leitung (45) abgezogen wird; ein Teilstrom dieser Lösung wird durch die Leitung (46) im Kreislauf zurückgeführt. Gebildete Gase zieht man durch den Auslaß (47) ab und man führt aus Sicherheitsgründen ein inertes Spülgas (z.B. $N_2$) durch die Leitung (48) in den Gassammelraum (49), um der Erylosionsgefahr zu begegnen. Der Druck in der Kolonne (35) kann im Bereich von 1 bis 60 bar liegen, sie ist besonders für das Arbeiten bei hohem Druck geeignet.

Beispiel 1

Im Labor wird in einer Anordnung gemäß Fig. 1 gearbeitet, wobei die Elektroden jeweils Außenmaße von 10 x 10 cm haben. Die Gasdiffusionskathode K besteht aus einem Streckmetallgitter aus nickelhaltigem Stahl (Hastelloy) und einem Kohlenstoffgewebe einer Stärke von 0,2 mm. Das Gewebe (Hersteller: ZOLTEK, USA) ist mit Ruß- und PTFE-Partikeln beschichtet. Eine Stützplatte aus gelochtem Polyvinylchlorid ist durch eine Rahmendichtung auf das Gewebe gedrückt. Die Stützplatte erzeugt durch ihre Löcher auf der Kathode eine freie Fläche von 70 cm$^2$. Als Anode A dient eine glatte Metallplatte aus nickelreichem Stahl. Der Abstand zwischen der Stützplatte und der Anode beträgt 3 mm. Dem Gasverteilerraum (6) wird technisch reiner Sauerstoff zugeführt und dabei ein Überdruck von 600 mm Wassersäule aufrechterhalten. Ein Teil des Gases perlt durch das Kohlenstoffgewebe in die Elektrolytkammer (5).

Über die Leitung (8) werden pro Stunde 50 l wäßrige Lösung mit einem $(NH_4)_2S$-Gehalt von 50 g/l und einer Temperatur von 40°C der Zelle zugeführt. Bei einer Zellenspannung von 0,3 Volt fließt ein Strom von 3,5 A, so daß die Stromdichte 350 A/m$^2$ beträgt. Pro Stunde werden 6,8 g Sulfid umgesetzt, davon werden 93 % über eine Schwefel-Analyse als APS bestimmt. In einem Vergleichsversuch bei abgeschalteter Stromquelle wird festgestellt, daß 0,5 g/h Sulfid umgesetzt wird. Damit reagieren nach Abzug des Anteils, der stromlos oxidiert wird, 6,3 g/h Sulfid unter Elektrolysebedingungen.

Die Menge von 6,3 g/h Sulfid wird durch einen oder mehrere der Wege A, B und C erzeugt. Um dies aufzuklären, wird ein Parallelversuch mit einer Membranzelle durchgeführt, bei welcher die Kathodenkammer von der Anodenkammer durch eine Ionenaustauschermembran getrennt ist (vgl. DE-C-43 06 445) und die gleiche $(NH_4)_2S$-Lösung durch die Anodenkammer geleitet wird. Hierbei werden bei einem Strom von 3,5 A pro Stunde 2,1 g Sulfid mit einer Ausbeute von 93 % zu APS umgesetzt. Dieser Sulfid-Umsatz erfolgt ausschließlich an der Anode nach dem Weg A auf rein elektrochemische Weise. Damit ist geklärt, daß die Differenzmenge von (6,3 - 2,1) g/h = 4,2 g/h Sulfid über die Wege B und C erzeugt worden ist.

Anteil der über den Weg B umgesetzten Sulfidmenge: Aus weiteren Parallelversuchen mit einer Zwei-Kammer-Membranzelle mit einer Gasdiffusionskathode und Zufuhr von technisch reinem $O_2$ ist bekannt, daß sich Hydroperoxid-Anionen (OOH$^-$) durch die Reaktion

$$O_2 + H_2O + 2e \rightarrow OOH^- + OH^-$$

mit einer Ausbeute von 80 %, bezogen auf die geflossene Strommenge, bilden. Wiederum werden die OOH$^-$-Ionen vollständig mit Sulfidionen nach der Reaktion

$$S^{2-} + OOH^- + H_2O \rightarrow S + 3\ OH^-$$

umgesetzt. Für die Sulfid-Umsetzung auf dem Weg B ergeben sich somit (2,1 · 0,8) g/h = 1,7 g/h Sulfid. Also werden beim Laborversuch mit der Anordnung gemäß Fig. 1 an der Gasdiffusionskathode unter dem Stromfluß von 3,5 A 1,7 g/h Sulfid umgesetzt. Der Laborversuch hatte also das in der Tabelle in Spalte I angegebene Ergebnis:

<div align="center">Tabelle</div>

|  | I | II |
|---|---|---|
| Sulfidumsetzung auf dem Weg A: | 2,1 g/h | 0,3 g/h |
| Sulfidumsetzung auf dem Weg B: | 1,7 g/h | 0,24 g/h |
| Sulfidumsetzung auf dem Weg C: | 2,5 g/h | 3,14 g/h |
| Sulfidumsetzung mit nichtaktiviertem Sauerstoff: | 0,5 g/h | 0,5 g/h |
| gesamte Sulfidumsetzung: | 6,8 g/h | 4,18 g/h |

Beispiel 2

In einem zweiten Laborversuch mit der Anordnung wie im Beispiel 1, jedoch mit einem Stromfluß von 0,5 A und einer Zellenspannung von 0,02 Volt, erhält man Sulfidumsetzungen, wie sie in obiger Tabelle in Spalte II angegeben sind.

Nach dem bekannten Verfahren gemäß DE-C-43 06 445 erhält man Sulfidumsetzungen nur auf dem Weg A und durch nichtaktivierten Sauerstoff; die Umsetzung auf den Wegen B und C ist aus DE-C-43 06 445 nicht bekannt. Für die obige Tabelle bedeutet dies, daß in Spalte I nur die Umsetzung von (2,1 + 0,5) g/h = 2,6 g/h Sulfid in bekannter Weise erzeugt wird und daß (1,7 + 2,5) g/h = 4,2 g/h Sulfid auf neue Art zusätzlich erzeugt werden. Gemäß Spalte II bei erstaunlich niedrigem Strom werden 0,8 g/h Sulfid auf bekannte Weise und zusätzlich 3,38 g/h Sulfid auf neue Art erzeugt.

**Patentansprüche**

1. Verfahren zum Erzeugen von Ammoniumpolysulfid (APS) in mindestens einer elektrochemischen Zelle, welcher man als Elektrolyt eine wäßrige Ammoniumsulfid-Lösung zuführt und aus welcher man eine APS enthaltende Lösung abzieht, dadurch gekennzeichnet, daß die Zelle eine Anode, eine Gasdiffusionskathode und zwischen der Anode und der Kathode eine Elektrolytkammer aufweist, wobei die Zellenspannung 0,01 bis 5 Volt beträgt, daß die Kathode eine elektrisch leitende, gasdurchlässige Kohlenstoffschicht aufweist, die mit freien Sauerstoff enthaltendem Gas angeströmt wird und mit dem Elektrolyten in Kontakt steht, daß man freien Sauerstoff enthaltendes Gas in die Elektrolytkammer leitet, wobei in der Elektrolytkammer Hydroperoxid-Anionen (OOH⁻) gebildet werden, und daß man aus der Elektrolytkammer eine APS enthaltende Lösung und ein Restgas abzieht.

2. Verfahren nach Anspruch 1, dadurch gekennzeichnet, daß mindestens 10 Gew.-% des gebildeten APS durch die Bildung von Hydroperoxid-Anionen und deren Umsetzung mit Sulfidionen erzeugt werden.

3. Verfahren nach Anspruch 1, dadurch gekennzeichnet, daß mindestens 10 Gew.-% des gebildeten APS durch den gasförmigen Sauerstoff erzeugt werden, der in die Elektrolytkammer geleitet wird.

4. Verfahren nach Anspruch 1, dadurch gekennzeichnet, daß die Kohlenstoffschicht durch Kohlenstoffasern gebildet wird.

5. Verfahren nach Anspruch 1, dadurch gekennzeichnet, daß die Kohlenstoffschicht durch Granulat aus Kohlenstoff gebildet wird.

6. Verfahren nach Anspruch 1, dadurch gekennzeichnet, daß die Kohlenstoffschicht aus Packungskörpern gebildet wird.

7. Verfahren nach einem der Ansprüche 1 bis 6, dadurch gekennzeichnet, daß mehrere Zellen miteinander verbunden sind, wobei die Kathoden und die Anoden elektrisch parallel geschaltet sind.

8. Verfahren nach einem der Ansprüche 1 bis 6, dadurch gekennzeichnet, daß mehrere Zellen miteinander verbunden sind, wobei die Kathoden und die Anoden elektrisch in Serie geschaltet sind.

Fig. 1

Fig. 2

Fig. 3

Fig. 4

Fig. 6

Fig. 5